# EUROPEAN PATENT APPLICATION

(11) **EP 1 662 406 A1**
(43) Date of publication of application: **31.05.2006**
(21) Application number: 05019567.6
(22) Date of filing: 08.09.2005
(51) Int. Cl.: G06F 17/30

(54) **Aggregation of plural Web sites for single site access by mobile communication terminals**

(30) Priority: 30.11.2004 JP 2004347173
(71) Applicant: NTT DoCoMo, Inc., Tokyo 100-6150 (JP)
(72) Inventor: Murozumi, Atsuko NTT DoCoMo, Inc, Int.Pro.Dpt, Chiyoda-ku Tokyo100-6150 (JP); Kikuchi, Daisuke NTT DoCoMo, Inc, Int.Pro.Dpt, Chiyoda-ku Tokyo100-6150 (JP)
(74) Representative: GROSSE BOCKHORNI SCHUMACHER

(57) **Abstract**

Site information on plural Web sites that a user desires is provided without causing a mobile communication terminal to access the plural Web sites. A site information providing device, based on a telephone number received from a mobile phone, extracts user information corresponding to the telephone number from a user information database, extracts a site information ID corresponding to the user information from a site information ID database based on the extracted user information, and extracts site information corresponding to the site information ID from a site information database based on the extracted plural site information IDs. Then, the site information providing device generates a site information list screen based on the plural pieces of extracted site information and transmits it to an address of the mobile phone corresponding to the telephone number.

## Description

### BACKGROUND OF THE INVENTION

### Field of the Invention

The present invention relates to a site information providing device and a site information providing method.

### Related Background of the Invention

Conventionally, in case of browsing site information published on a Web site with a mobile communication terminal typically represented by a mobile phone, the specific Web site is accessed to allow the site information on the Web site to be displayed on a screen. A technique to browse site information published on a specific Web site with a mobile communication terminal has been disclosed in, for example, Patent document 1 (Japanese Patent Application Publication No. 2003-256326) etc.

### SUMMARY OF THE INVENTION

By the way, in the conventional browsing technique, while browsing site information published on a specific Web site with the mobile communication terminal, in a case of intending to browse site information on another Web site, it is necessary to access the other Web site again by, for example, selecting a URL (Uniform Resource Locator) of the other Web site embedded on the screen.

In order to solve the above-mentioned problem, an object of the present invention is to provide a site information providing device and a site information providing method capable of providing site information on plural Web sites that a user desires without causing the user's mobile communication terminal to access the plural Web sites.

The site information providing device of the present invention is characterized by including a terminal ID receiving means for receiving a terminal ID for uniquely identifying a mobile communication terminal, a site information extracting means for extracting site information on one or plural Web sites stored in advance correspondingly with the terminal ID based on the terminal ID received by the terminal ID receiving means, and a site information transmitting means for transmitting the site information on the one or plural Web sites extracted by the site information extracting means to an address of the mobile communication terminal corresponding to the terminal ID received by the terminal ID receiving means.

Further, the site information providing method of the present invention is characterized by including a terminal ID receiving step for receiving a terminal ID for uniquely identifying a mobile communication terminal, a site information extracting step for extracting site information on one or plural Web sites stored in advance correspondingly with the terminal ID based on the terminal ID received in the terminal ID receiving step, and a site information transmitting step for transmitting the site information on the one or plural Web sites extracted in the site information extracting step to an address of the mobile communication terminal corresponding to the terminal ID received in the terminal ID receiving step.

According to the present invention, it is possible to extract the site information on one or plural Web sites stored in advance correspondingly with the terminal ID transmitted by the mobile communication terminal and to transmit the extracted site information to the mobile communication terminal. That is, the mobile communication terminal transmits the terminal ID to the site information providing device, thereby allowing the site information of the one or plural Web sites stored in advance correspondingly with the terminal ID to be displayed. In other words, it becomes possible to provide site information on plural Web sites that a user of the mobile communication terminal desires without causing the mobile communication terminal to access the plural Web sites.

It is preferable for the site information providing device of the present invention to further include a user information extracting means for extracting user information corresponding to the terminal ID received by the terminal ID receiving means from the user information about the user of the mobile communication terminal stored in advance correspondingly with the terminal ID and a site information ID extracting means for extracting a site information ID corresponding to the user information extracted by the user information extracting means from the site information ID for uniquely identifying the site information to be provided to the user stored in advance correspondingly with the user information, wherein the site information extracting means extracts the site information corresponding to the one or plural site information IDs extracted by the site information ID extracting means from the site information stored in advance correspondingly with the site information ID.

As described above, further including the user information extracting means and the site information ID extracting means makes it possible to extract the user information stored in advance correspondingly with the terminal ID transmitted by the mobile communication terminal and to extract the site information ID stored in advance correspondingly with the extracted user information. Therefore, it is possible for the site information extracting means to extract the site information stored in advance correspondingly with the above-mentioned extracted site information ID as the site information stored in advance correspondingly with the terminal ID.

It is preferable for the site information providing device of the present invention to further include a list screen generating means for generating a site information list screen based on one or plural pieces of site information extracted by the site information extracting means, wherein the site information transmitting means transmits the site information list screen generated by the list screen generating means.

As described above, further including the list screen generation means makes it possible to transmit the site information list screen generated based on the extracted one or plural pieces of site information. This enables the site information to be list-displayed on the display screen of the mobile communication terminal, which can improve the visibility of the user.

It is preferable for the site information providing device of the present invention to further include a display requesting-or-not information receiving means for receiving display requesting-or-not information indicating whether or not site information need be displayed, wherein the list screen generating means displays identification information for identifying the site information without displaying the site information on the site information list screen when the display requesting-or-not information received by the display requesting-or-not information receiving means indicates that the site information need not be displayed.

As described above, further including the display requesting-or-not information receiving means enables the display requesting-or-not information transmitted by the mobile communication terminal to be received. Therefore, when the display requesting-or-not information indicates that the site information need not be displayed, the list screen generating means allows the identification information for identifying the site information to be displayed on the site information list screen. This makes it possible to suppress the amount of information, which is displayed on the screen of the mobile communication, and to make the display information easier-to-see.

It is preferable for the site information providing device to further include a site information storing means for storing the site information correspondingly with the site information ID, a site information receiving means for receiving the site information ID and the site information from the outside, a site registration information storing means for storing the site information received by the site information receiving means correspondingly with the site information ID received by the site information receiving means as the site registration information, and a site information updating means for replacing the site information stored by the site information storing means with the site registration information stored by the site registration information storing means for updating at each predetermined timing.

As described above, further including the site information receiving means and the site registration information storing means enables the site information to be stored as the site registration information based on the site information ID and the site information transmitted from the outside. Further, including the site information update means makes it possible to replace the site information stored by the site information storing means with the site registration information stored by the site registration information storing means for updating at each predetermined timing. Due to this, it is possible to limit a target of update in the update process of the site information from the outside to the site registration information stored by the site registration information storing means. Therefore, since it is possible to prevent the site information stored by the site information storing means from being accessed directly from the outside, the security can be improved.

In the site information providing device of the present invention, it is preferable for the above-mentioned user information to include information about attributes of a user typically represented by a user ID, sex, age, a horoscope constellation, an address, a machine type ID, a blood type, and a hobby. Doing so makes it possible to cause a user to browse site information registered in accordance with the attributes of the user.

According to the site information providing device and the site information providing method of the present invention, it is possible to provide site information on plural Web sites that a user desires without causing the user's mobile communication terminal to access the plural Web sites.

### BRIEF DESCRIPTION OF THE DRAWINGS

Fig.1 is a diagram showing a system configuration of a site information providing system in an embodiment of the present invention.

Fig.2 is a block diagram showing a functional configuration of a site information providing device shown in Fig.1.

Fig.3 is a diagram showing a data configuration of a user information database.

Fig.4 is a diagram showing a data configuration of a site information ID database.

Fig.5 is a diagram showing a data configuration of a site information database.

Fig.6 is a diagram showing a data configuration of a site registration information database.

Fig.7 is a sequence diagram showing a flow of a site information providing process.

### DESCRIPTION OF THE PREFERRED EMBODIMENTS

Embodiments of the site information providing device and the site information providing method according to the present invention are explained below with reference to drawings. The same symbols are attached to the same components and a duplicated explanation will be omitted here.

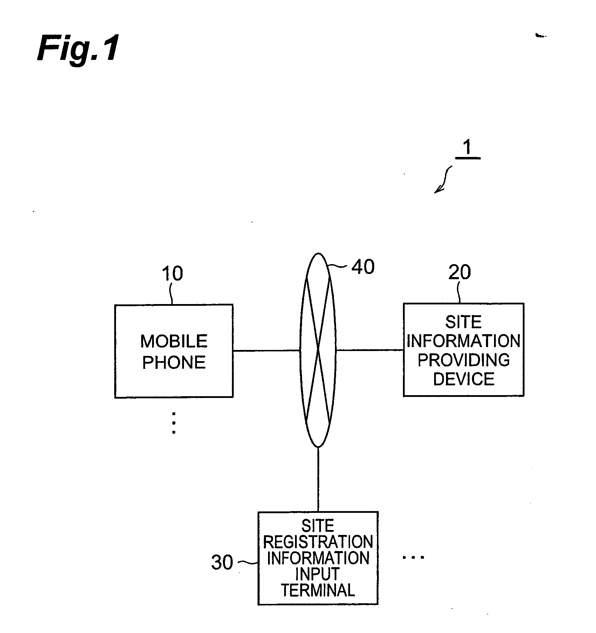

Fig.1 is a diagram exemplifying a site information providing system 1 in this embodiment. As shown in Fig.1, the site information providing system 1 includes a mobile phone 10, a site information providing device 20, and a site registration information input terminal 30. The mobile phone 10, the site information providing device 20, and the site registration information input terminal 30 are connectable with each another via a communication line 40 including a mobile communication network.

The mobile phone 10 is a mobile communication terminal for wireless-communicating with a base station that covers the wireless area in which the mobile phone 10 exists and receiving communication services or packet communication services. The site information providing device 20 is a server device managed by the mobile communication network side, which accumulates site information on various Web sites and provides the site information to the mobile phone 10. The site registration information input terminal 30 is a terminal device managed by each Web site, which transmits the site information published on the Web site to the site information providing device 20 as the site registration information.

In the site information providing system 1 in this embodiment, the explanation is made using the mobile phone 10 as a concrete example of the mobile communication terminal, but the concrete example is not limited to this and the mobile communication terminal may be a mobile communication terminal such as a personal handy-phone system (PHS) and a personal digital assistant (PDA) having the communication function.

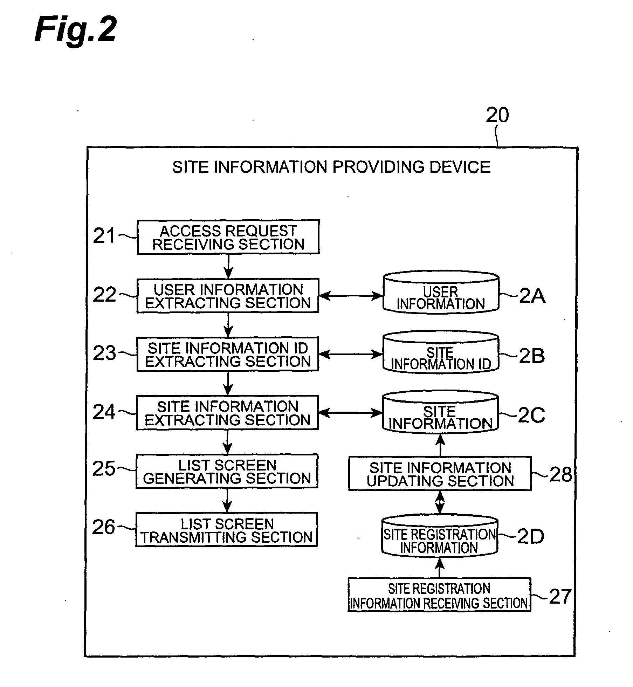

Next, the functional configuration of the site information providing device 20 is explained with reference to Fig.2. As shown in Fig.2, the site information providing device 20 includes an access request receiving section 21 (terminal ID receiving means, display requesting-or-not information receiving means), a user information extracting section 22 (user information extracting means), a site information ID extracting section 23 (site information ID extracting means), a site information extracting section 24 (site information extracting means), a list screen generating section 25 (list screen generating means), a list screen transmitting section 26 (site information transmitting means), a site registration information receiving section 27 (site information receiving means), and a site information updating section 28 (site information updating means). Further, the site information providing device 20 includes a user information database 2A (user information storing means), a site information ID database 2B (site information ID storing means), a site information database 2C (site information storing means), and a site registration information database 2D (site registration information storing means) for storing information to be used by each of the above-mentioned functions.

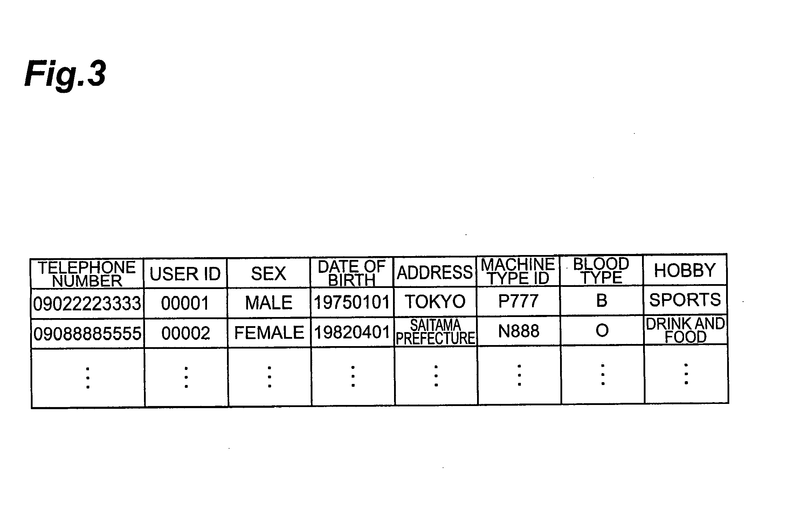

Here, the data configuration of the user information database 2A is explained with reference to Fig.3. The user information database 2A is a database for storing user information about the user of the mobile phone 10. The user information database 2A has, for example, a telephone number (terminal ID), a user ID, sex, a date of birth, an address, a machine type ID, a blood type, and a hobby as data items. In the telephone number, the ID such as "09022223333" for uniquely identifying the mobile phone 10 is filed. In the user ID, the ID such as "00001" for uniquely identifying the user of the mobile phone 10 is filed.
In the sex, information indicating the "male" sex or the "female" sex is filed. In the data of birth, the date of birth of the user such as "19750101" is filed. In the address, the address of the user such as "..., Tokyo" is filed. In the machine type ID, the ID such as "P777" for identifying the machine type of the mobile phone 10 is filed. In the blood type, the blood type of the user such as "B" or "O" is filed. In the hobby, the category in which the user is interested, for example, "sports" or "drink and food", is filed. The information filed in the sex, the date of birth, and the address of the user information database 2A is information registered at the time of the purchase of the mobile phone 10 by the user, which can be changed afterward. The information filed in the machine type ID, the blood type, and the hobby is information that can be registered and updated via, for example, a mobile communication network after the purchase of the mobile phone 10 by the user.

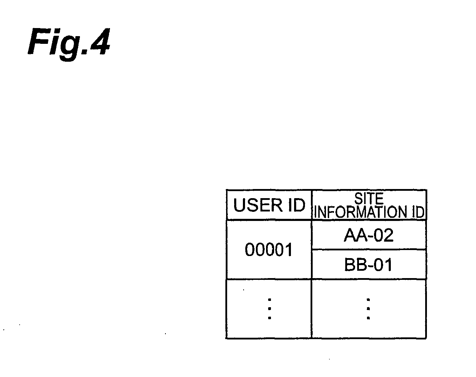

The data configuration of the site information ID database 2B is explained with reference to Fig.4. The site information ID database 2B is a database for storing a site information ID for identifying site information of which provision a user desires for each user. The site information ID database 2B has, for example, a user ID and a site information ID as data items. The user ID is the same as that of the user information database 2A described above. In the site information ID, the ID for uniquely identifying site information the user desires, for example, "AA-02" or "BB-01" is filed. The site information ID can be registered in one or plural for each user ID.

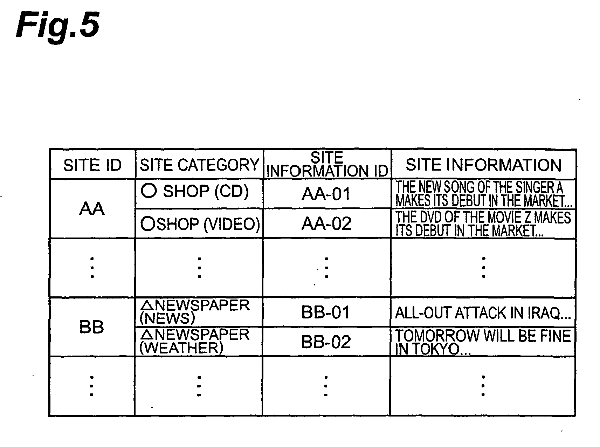

The data configuration of the site information database 2C is explained with reference to Fig.5. The site information database 2C is a database for storing site information to be provided to the user. The site information database 2C has, for example, a site ID, a site category, a site information ID, and site information as data items. In the site ID, the ID for uniquely identifying the Web site on which the site information is published, for example, "AA" or "BB" is filed. In the site category, a Web site name and a category of site information such as "x shop (CD)", "x shop (video)" or "x newspaper (news)" are filed. The site information ID is the same as that of the site information ID database 2B described above. In the site information, contents of the latest site information published on a Web site, for example, "The new song of a singer A has made its debut in the market..." are filed. The information filed in the site information database 2C is replaced with the information filed in the site registration information database 2D for updating, which will be described later.

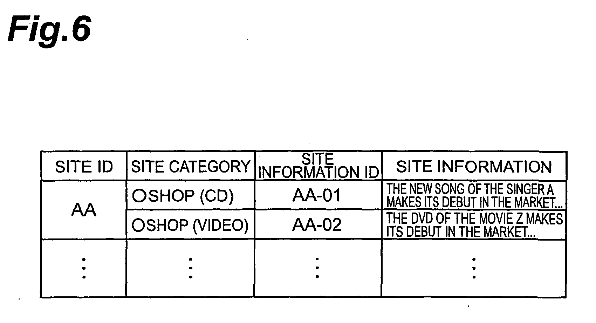

The data configuration of the site registration information database 2D is explained with reference to Fig.6. The site registration information database 2D is a database for storing site information published on the Web site. The information registered in the site registration information database 2D is filed in the data table prepared for each site ID. In other words, the site registration information database 2D is configured to include one or plural data tables prepared for each Web site. Each data table has, for example, a site ID, a site category, a site information ID, and site information as data items. The respective data items are the same as that of the site information database 2C described above. The information filed in each data table is replaced at any time with information input by an operator for updating, who operates the site registration information input terminal 30 of each Web site.

The access request receiving section 21 shown in Fig.2 receives an access request transmitted by the mobile phone 10. The access request includes, for example, the telephone number of the mobile telephone 10 and display requesting-or-not information that can be set arbitrarily by the user. The display requesting-or-not information is information indicating whether or not the contents themselves of the site information are included in the display information to be provided to the mobile phone 10. In other words, it is information indicating whether or not the contents of the site information are displayed on the screen of the mobile telephone 10 as they are.

Therefore, when the display requesting-or-not information indicates that the contents themselves of the site information need be displayed, the contents themselves of the site information are displayed on the screen of the mobile phone 10. On the other hand, when the display requesting-or-not information indicates that the contents themselves of the site information need not be displayed, the contents themselves of the site information are not displayed on the screen of the mobile phone 10. Here, when the contents themselves of the site information are not displayed on the screen of the mobile phone 10, the identification information for allowing the user to identify the site information, for example, the site information name etc. having the URL of the site information embedded should be displayed. In other words, what is required is that the user can make the mobile phone 10 access the location, on which the contents of the site information are stored, based on the identification information displayed on the screen. This makes it possible to suppress the amount of information displayed on the screen of the mobile phone 10 and make the displayed information easier-to-see.

The user information extracting section 22 extracts user information corresponding to the telephone number from the user information stored in the user information database 2A based on the telephone number received by the access request receiving section 21.

The site information ID extracting section 23 extracts a site information ID corresponding to the user ID from the site information ID stored in the site information ID database 2B based on the user ID included in the user information extracted by the user information extracting section 22.

The site information extraction section 24 extracts site information corresponding to the site information ID from the site information stored in the site information ID database 2B based on one or plural site information IDs extracted by the site information ID extracting section 23.

The list screen generating section 25 generates a site information list screen based on one or plural pieces of site information extracted by the site information extracting section 24. To explain more specifically, when the display requesting-or-not information received by the access request receiving section 21 indicates that the site information need be displayed, the list screen generating section 25 generates a site information list screen on which one or plural pieces of site information are list-displayed. In contrast to this, when the display requesting-or-not information received by the access request receiving section 21 indicates that the site information need not be displayed, the list screen generating section 25 generates a site information list screen on which the identification information having the URL for filing the site information embedded is list-displayed. In other words, the contents themselves of the site information are not displayed on the site information list screen but the identification information for identifying the site information is displayed.

It may be possible for the list screen generating section 25 to determine a design of the site information list screen based on the machine type ID included in the user information. This is because the size of the display screen region of the mobile phone 10, information that is displayable on the screen, or the like differs depending on the machine type of the mobile phone 10. Therefore, it becomes possible to provide site information using the most suitable screen design for each machine type by registering in advance the screen design that suits to each machine type in the site information providing device 20.

The list screen transmitting section 26 transmits the site information list screen generated by the list screen generating section 25 to an address of the mobile phone 10 corresponding to the telephone number received by the access request receiving section 21. Although the list screen transmitting section 26 transmits the site information list screen generated by the list screen generating section 25 to an address of the mobile phone 10, the site information does not always have to be incorporated in the list screen before transmitting it. For example, it may be possible to transmit one or plural pieces of site information as they are without being incorporated in the list screen. In this case, after generating the list screen based on the received site information in the mobile phone 10 side that has received the one or plural pieces of information, the generated list screen has to be displayed on the display screen. However, by incorporating the site information in the list screen before transmission to the mobile phone 10, it becomes possible to easily list-display the site information on the display screen of the mobile phone 10.

The site registration information receiving section 27 receives the site information ID and the site information from the site registration information input terminal 30.

The site information updating section 28 replaces the site information stored in the site information database 2C with the site registration information stored in the site registration information database 2D for updating at each predetermined update timing. The predetermined update timing, which corresponds to, for example, each time the site registration information database 2D is updated, every hour, every day, etc., can be arbitrarily set by a system manager.

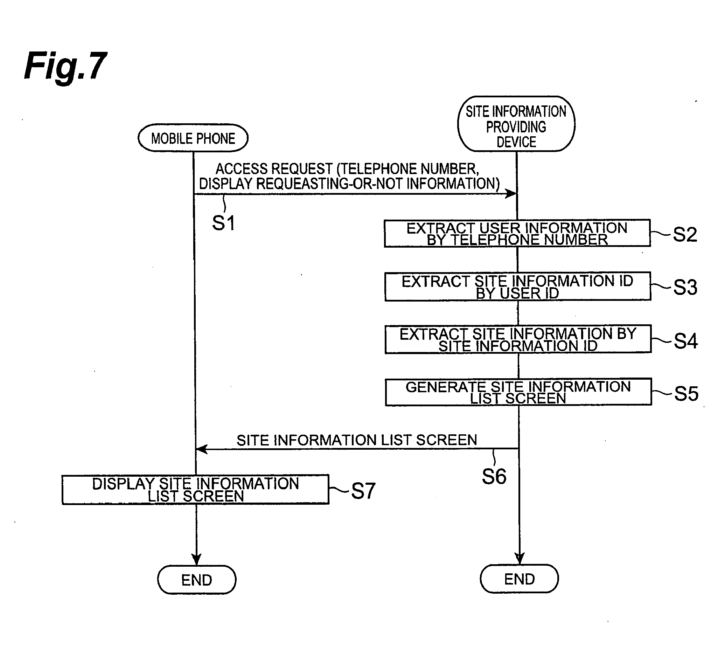

Next, with reference to Fig.7, the flow of the site information providing process carried out in the site information providing system 1 is explained below.

First, the mobile phone 10 transmits an access request including the telephone number and the display requesting-or-not information to the site information providing device 20 (step S1). Due to this, the access request receiving section 21 of the site information providing device 20 receives the access request transmitted by the mobile phone 10.

Next, the user information extracting section 22 of the site information providing device 20 extracts user information corresponding to the telephone number from the user information stored in the user information database 2A based on the telephone number included in the access request received by the access request receiving section 21 (step S2).

Next, the site information ID extracting section 23 of the site information providing device 20 extracts the site information ID corresponding to the user ID from the site information ID stored in the site information ID database 2B based on the user ID included in the user information extracted by the user information extracting section 22 (step S3).

Next, the site information extracting section 24 of the site information providing device 20 extracts the site information corresponding to the site information ID from the site information stored in the site information database 2C based on the one or plural site information IDs extracted by the site information ID extracting section 23 (step S4).

Next, the list screen generating section 25 of the site information providing device 20 generates the site information list screen based on the display requesting-or-not information included in the access request received by the access request receiving section 21 and the one or plural pieces of site information extracted by the site information extracting section 24 (step S5).

Next, the list screen transmitting section 26 of the site information providing device 20 transmits the site information list screen generated by the list screen generating section 25 to an address of the mobile phone 10 corresponding to the telephone number received by the access request receiving section 21 (step S6). Due to this, the site information list screen is received by the mobile phone 10.

Next, the mobile phone 10 displays the site information list screen on the screen (step S7). Due to this, it is possible for the user to easily browse the plural pieces of site information that the user desires on the screen of the mobile phone 10.

According to the site information providing system 1 described above, the site information providing device 20 includes the access request receiving section 21, the user information extracting section 22, the site information ID extracting section 23, and the site information extracting section 24, thereby making it possible to extract the user information stored in advance correspondingly with the telephone number included in the access request transmitted by the mobile phone 10, to extract the site information ID stored in advance correspondingly with the extracted user information, and further to extract the site information on one or plural Web sites stored in advance correspondingly with the extracted site information ID. In other words, it is possible for the site information providing device 20 to extract the site information on one or plural Web sites stored in advance correspondingly with the telephone number of the mobile phone 10 based on the telephone number transmitted by the mobile phone 10.

Further, the site information providing device 20 includes the list screen generating section 25 and the list screen transmitting section 26, thereby making it possible to transmit the site information list screen generated based on the extracted one or plural pieces of site information to the mobile phone 10. In other words, the mobile phone 10 transmits its own telephone number to the site information providing device 20, thereby allowing the screen on which one or plural pieces of site information stored in advance correspondingly with the telephone number are list-displayed to be displayed. That is, it becomes possible to provide the site information on plural Web sites that the user of the mobile phone 10 desires without causing the mobile phone 10 to access the plural Web sites.

Further, the site information providing device 20 includes the site registration information receiving section 27, thereby making it possible to store the site information in the site registration information database 2D as site registration information based on the site information ID and the site information transmitted by the site registration information input terminal 30.

Further, the site information providing device 20 includes the site information update section 28, thereby making it possible to replace the site information stored in the site information database 2C with the site registration information stored in the site registration information database 2D for updating at each predetermined update timing. Due to this, it is possible to limit an target of update in the update process of the site information by the site registration information input terminal 30 to the site registration information stored in the site registration information database 2D. Therefore, since it is possible to prevent the site registration information input terminal 30 from directly accessing the site information stored in the site information database 2C, the security can be improved.

The site information ID filed in the site information ID database 2B in the above-mentioned embodiment does not have to be stored necessarily correspondingly with the user ID. For example, the site information ID may be stored correspondingly with the sex, the age, the horoscope constellation (the age and the horoscope constellation can be known from the date of birth), the address, the machine type ID, a blood type, the hobby, or a combination thereof, which are the data items of the above-mentioned user information database 2A. In other words, it may be possible to store it correspondingly with the attributes of the user. Therefore, for example, the site information ID may be stored correspondingly with the age and the sex. In this case, for example, when the user is a man in his thirties, it is possible to acquire a site information ID of the site information registered in advance for men in their thirties by retrieving the site information ID database 2B based on the user information (date of birth, sex) registered in advance in the user information database 2A. Doing so makes it possible for the user to browse the site information registered in corresponding to the attributes of the user.

The display requesting-or-not information in the embodiment described above does not have to be included necessarily in the access request. In other words, it may be possible to keep the site information being always displayed on the list screen instead of including the display requesting-or-not information in the access request. Further, it may be possible for the site information providing device 20 to determine the presence or absence of the display of the site information in accordance with the machine type of the mobile phone 10. In this case, the site information providing device 20 should determine whether or not the site information is displayed on the list screen based the machine type ID included in the user information corresponding to the telephone number of the mobile telephone 10. Due to this, it is possible to provide site information that the user desires using the list screen in accordance with the display region etc. of the screen depending on the machine type.

## Claims

1. A site information providing device, comprising:
a terminal ID receiving means for receiving a terminal ID for uniquely identifying a mobile communication terminal;
a site information extracting means for extracting site information on one or plural Web sites stored in advance correspondingly with the terminal ID based on the terminal ID received by the terminal ID receiving means; and
a site information transmitting means for transmitting the one or plural pieces of site information extracted by the site information extracting means to the address of the mobile communication terminal corresponding to the terminal ID received by the terminal ID receiving means.

2. The site information providing device according to claim 1, further comprising:
a user information extracting means for extracting the user information corresponding to the terminal ID received by the terminal ID receiving means from the user information about the user of the mobile communication terminal stored in advance correspondingly with the terminal ID; and
a site information ID extracting means for extracting the site information ID corresponding to the user information extracted by the user information extracting means from the site information ID for uniquely identifying the site information to be provided to the user stored in advance correspondingly with the user information, wherein
the site information extracting means extracts the site information corresponding to the one or plural site information IDs extracted by the site information ID extracting means from the site information stored in advance correspondingly with the site information ID.

3. The site information providing device according to any one of claim 1 and claim 2, further comprising a list screen generating means for generating a site information list screen based on the one or plural pieces of the site information extracted by the site information extracting means, wherein the site information transmitting means transmits the site information list screen generated by the list screen generating means.

4. The site information providing device according to claim 3, further comprising a display requesting-or-not information receiving means for receiving display requesting-or-not information indicating whether or not the site information need be displayed, wherein the list screen generating means displays identification information for identifying the site information without displaying the site information on the site information list screen when the display requesting-or-not information received by the display requesting-or-not information receiving means indicates that the site information need not be displayed.

5. The site information providing device according to any one of claims 1 to claim 4, further comprising:
a site information storing means for storing the site information correspondingly with the site information ID;
a site information receiving means for receiving the site information ID and the site information from the outside;
a site registration information storing means for storing the site information received by the site information receiving means as site registration information correspondingly with the site information ID received by the site information receiving means; and
a site information updating means for replacing the site information stored by the site information storing means with the site registration information stored by the site registration information storing means for updating at each predetermined update timing.

6. The site information providing device according to claims 2, wherein the user information includes information about attributes of a user typically represented by a user ID, sex, age, a horoscope constellation, an address, a machine type ID, a blood type, and a hobby.

7. A site information providing method comprising:
a terminal ID receiving step for receiving a terminal ID for uniquely identifying a mobile communication terminal;
a site information extracting step for extracting site information on one or plural Web sites stored in advance correspondingly with the terminal ID based on the terminal ID received in the terminal ID receiving step; and
a site information transmitting step for transmitting the one or plural pieces of site information extracted in the site information extracting step to an address of the mobile communication terminal corresponding to the terminal ID received in the terminal ID receiving step.
